# EUROPEAN PATENT APPLICATION

(11) **EP 3 982 212 A1**
(43) Date of publication of application: **13.04.2022**
(21) Application number: 20818934.0
(22) Date of filing: 05.03.2020
(51) Int. Cl.: G05B 19/048, G06F 21/55

(54) **CONTROL SYSTEM**

(30) Priority: 06.06.2019 JP 2019106286
(71) Applicant: OMRON Corporation, Shiokoji-dori, Shimogyo-ku, Kyoto-shi Kyoto 600-8530 (JP)
(72) Inventor: KOGAWARA, Toru, Kyoto-shi, Kyoto 600-8530 (JP); YAMAMOTO, Taisei, Kyoto-shi, Kyoto 600-8530 (JP); HIROBE, Naoki, Kyoto-shi, Kyoto 600-8530 (JP); NAGATA, Yuta, Kyoto-shi, Kyoto 600-8530 (JP)
(74) Representative: Mewburn Ellis LLP
(86) International application number: PCT/JP2020/009293
(87) International publication number: WO 2020/246088

(57) **Abstract**

An object of the present invention is to provide a control system in which the relationship between an operation state of a control target and an incident response operation can be discretionarily designed. A control system (10) includes: a control engine (150) that cyclically updates internal state values (1510) on the basis of a signal exchanged with a control target (500); a security engine (250) that executes an incident response operation in response to an incident that possibly occurs in the control system; and a phase update means (252) that updates a phase value (2522) indicating an operation state of the control target on the basis of one or more values (1512) selected discretionarily in advance by a user from among the internal state values retained by the control engine. The security engine retains operation definition information (2542) in which the content of the incident response operation is defined for each phase, and executes a corresponding incident response operation defined in the operation definition information in accordance with the phase value (2522) updated by the phase update means.

## Description

### TECHNICAL FIELD

The present invention relates to a control system for controlling a control target.

### BACKGROUND ART

In production sites such as factories, various types of facilities operate, and control devices such as programmable logic controllers (PLCs) are used to control various facilities and various devices installed in each facility.

In recent years, damage such as malware has occurred in production sites such as factories, and security measures are needed for control devices such as PLCs. Therefore, when a device or a production line used in a factory or the like is developed, it is necessary for a production engineer, a developer in a device manufacturer, or the like to take security measures.

As disclosed in, for example, Japanese Patent Laying-Open No. 2000-137506 (PTL 1), a PLC only transmits an electronic mail to an address which is designated in advance when an abnormality history is registered or when a predetermined time has come, and does not consider any security measures.

### CITATION LIST

### PATENT LITERATURE

PTL 1: Japanese Patent Laying-Open No. 2000-137506

### SUMMARY OF INVENTION

### TECHNICAL PROBLEM

With the recent progress of information and communication technology (ICT), a control device is also connected to various external devices via a network, and processing executed in the control device is also advanced. In conjunction with such networked or intelligent devices, types of possible incidents are also increasing.

In preparation for a risk of an occurrence of various incidents associated with such networked or intelligent devices, it is desired to respond to possible incidents. It is presumed that the response to the possible incident differs depending on an operation state of the control target, such as whether the control target is stopped or operated. Therefore, it is desired to set an incident response operation according to the operation state of the control target.

In addition, a measure against the possible incident is designed according to a security policy defined by each customer using a control system, and is discretionarily designed depending on each customer. Therefore, it is required to provide a control system in which the relationship between the operation state of the control target and the incident response operation is discretionarily designed.

An object of the present invention is to provide a control system in which the relationship between an operation state of a control target and an incident response operation is discretionarily designed.

### SOLUTION TO PROBLEM

A control system for controlling a control target according to one aspect of the present disclosure includes: a control engine configured to cyclically update an internal state value on the basis of a signal exchanged with the control target; a security engine configured to execute an incident response operation in response to an incident that possibly occurs in the control system; and a phase update means configured to update a value of a phase indicating an operation state of the control target on the basis of one or more values discretionarily selected in advance by a user from the internal state value retained by the control engine and an internal state value retained by the security engine. The security engine includes: a means configured to retain operation definition information in which content of the incident response operation is defined for each phase; and an execution means configured to execute a corresponding incident response operation defined in the operation definition information according to the value of the phase updated by the phase update means.

According to this configuration, the value of the phase indicating the operation state of the control target is updated on the basis of one or more values discretionarily selected in advance by the user. That is, the operation state of the control target is defined on the basis of one or more values discretionarily selected in advance by the user. Since the content of the incident response operation is defined for each phase, it is possible to provide the control system in which the relationship between the operation state of the control target and the incident response operation is discretionarily designed.

In the above disclosure, the control system may include a setting means configured to receive selection of the one or more values used for updating the value of the phase. According to this configuration, the selection of the one or more values is received, by which it is possible to newly design the relationship between the operation state of the control target and the incident response operation and to change the relationship between the operation state of the control target and the incident response operation.

In the above disclosure, the phase update means may be incorporated in a part of the control engine. A control program executed by the control engine includes one or more commands for updating the value of the phase. According to this configuration, it is possible to provide the control system in which the relationship between the operation state of the control target and the incident response operation is discretionarily designed.

In the above disclosure, the setting means may receive, for each of the one or more commands for updating the value of the phase, an execution condition for executing the command. According to this configuration, the phase can be discretionarily defined by setting the execution condition for executing the command.

In the above disclosure, the phase update means updates the value of the phase according to a determination condition defining the phase. According to this configuration, it is possible to provide the control system in which the relationship between the operation state of the control target and the incident response operation is discretionarily designed.

In the above disclosure, the setting means receives, as the determination condition, selection of a value defining the phase from the internal state value retained by the control engine and the internal state value retained by the security engine. According to this configuration, the phase can be discretionarily defined by receiving selection of a value defining the phase.

In the above disclosure, the control system may further include a control unit including the control engine and a security unit including the security engine. A cycle of updating, by the control unit, the one or more values used for updating the value of the phase may be synchronized with a cycle of updating the value of the phase by the phase update means.

According to this configuration, the update cycle is synchronized between the value of the phase indicating the operation state of the control target and the internal state value updated based on the signal exchanged with the control target, so that the state of the control target can be reflected in the value of the phase in real time.

### ADVANTAGEOUS EFFECTS OF INVENTION

According to the present invention, it is possible to provide a control system in which the relationship between an operation state of a control target and an incident response operation is discretionarily designed.

### BRIEF DESCRIPTION OF DRAWINGS

Fig. 1 is a schematic diagram illustrating an example of a control system 10 according to an embodiment of the present disclosure.
Fig. 2 is an external view illustrating a configuration example of a controller system 1 according to the embodiment.
Fig. 3 is a schematic diagram illustrating a hardware configuration example of a control unit 100 constituting controller system 1 according to the embodiment.
Fig. 4 is a schematic diagram illustrating a hardware configuration example of a security unit 200 constituting controller system 1 according to the embodiment.
Fig. 5 is a schematic diagram illustrating a typical example of control system 10 including controller system 1 according to the embodiment.
Fig. 6 is a block diagram illustrating a functional configuration of controller system 1.
Fig. 7 is a diagram illustrating a cycle in which a phase update variable 1512 is updated by a control engine 150 and a cycle in which a phase value 2522 is updated by a security engine 250.
Fig. 8 is a schematic diagram illustrating a hardware configuration example of a support device 600.
Fig. 9 is a diagram illustrating an example of a default value of a setting screen.
Fig. 10 is a diagram for describing a method for adding a phase.
Fig. 11 is a diagram for describing an example when phase update variable 1512 to be newly used for phase determination is selected.
Fig. 12 is a block diagram illustrating a functional configuration of a control system 10a including a controller system 1a according to a modification.
Fig. 13 is a diagram illustrating an example of a user program for implementing a phase update means 152.

### DESCRIPTION OF EMBODIMENTS

An embodiment of the present invention will be described in detail with reference to the drawings. The same or corresponding parts in the drawings are denoted by the same reference signs, and the description thereof will not be repeated.

### <A. Application examples>

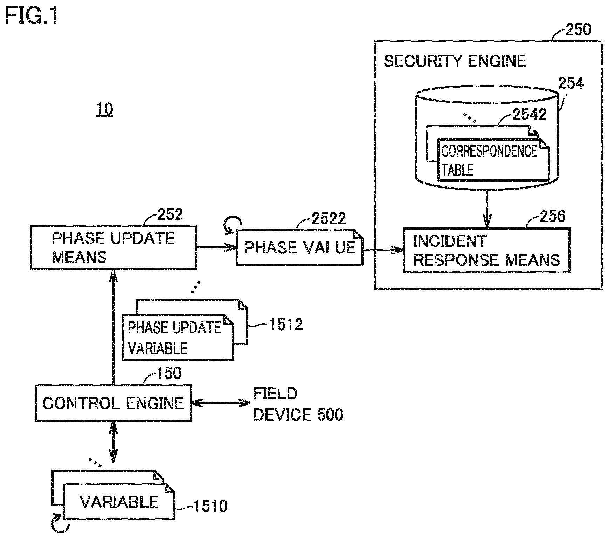

An example of a scene to which the present invention is applied will be described. First, a configuration of a control system 10 according to the present embodiment will be described. Fig. 1 is a schematic diagram illustrating an example of control system 10 according to the present embodiment.

Control system 10 includes a control engine 150, a security engine 250, and a phase update means 252. Note that each of control engine 150, security engine 250, and phase update means 252 is implemented by any hardware element such as a processor, any software element such as various programs, or a combination of these elements. Each engine can be implemented in any form. Note that control engine 150, security engine 250, and phase update means 252 may be implemented by one processor executing various programs. That is, control engine 150, security engine 250, and phase update means 252 may be implemented by one device.

Control engine 150 cyclically updates a value of a variable 1510 which is an internal state value on the basis of a signal exchanged with a field device 500 which is a control target. Variable 1510 includes a device variable indicating a value retained by field device 500 and an internal variable used only in the program executed by control unit 100. The device variable includes variables of input data input from field device 500 and output data output to field device 500. Furthermore, the internal variable includes, for example, a system variable indicating a state of control unit 100 and the like.

Security engine 250 executes an incident response operation in response to an incident that may occur in control system 10. In the present specification, the "incident" means a sign, a phenomenon, or an abnormality that can be a security threat to control system 10, mainly to controller system 1.

In the present specification, the "incident response operation" includes an operation of preventing an occurrence of an incident, an operation of changing a behavior in response to the incident that has occurred, and an operation accompanying the occurrence of the incident. The operation of preventing the occurrence of the incident includes an operation of detecting the incident and the like. The operation of changing the behavior in response to the incident includes an operation of giving notice of an incident that has occurred in order to change the behavior in response to the incident that has occurred.

Phase update means 252 updates a phase value 2522 on the basis of a variable for determination (phase update variable 1512) discretionarily selected by a user among the values of variable 1510 updated by control engine 150.

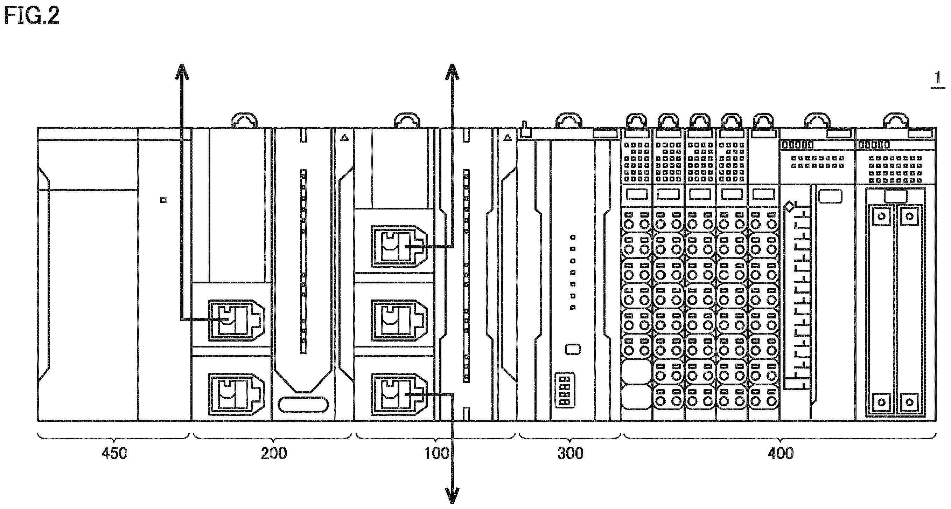

Phase update means 252 may be incorporated into control engine 150 or a part of security engine 250. In the present embodiment described with reference to Figs. 2 to 11, it is assumed that security engine 250 includes phase update means 252.

Security engine 250 includes a correspondence database 254 and an incident response means 256.

Phase update variable 1512 is selected by, for example, a device that provides a user with functions such as a function of creating a program, a debug function, and a function of setting various parameters.

Correspondence database 254 stores, for each phase, a correspondence table 2542 which is operation definition information in which the content of the incident response operation is defined. Each correspondence table 2542 and phase value 2522 have a correspondence relationship.

Incident response means 256 refers to phase value 2522 and correspondence database 254 updated by phase update means 252, refers to correspondence table 2542 corresponding to the phase indicated by phase value 2522, and executes the incident response operation.

For example, incident response means 256 changes a condition for detecting an occurrence of an incident and changes a behavior according to the incident that has occurred.

As described above, in the present embodiment, a phase indicating an operation state of the control target is a state defined by a value of phase update variable 1512 discretionarily selected by the user, and can be discretionarily defined by the user. That is, controller system 1 in the present embodiment can change the incident response operation for each phase discretionarily defined by the user. In other words, in control system 10, the relationship between the operation state of the control target and the incident response operation is discretionarily designed.

### <B. Controller system 1>

A configuration of controller system 1 according to the present embodiment will be described. Fig. 2 is an external view illustrating a configuration example of controller system 1 according to the present embodiment. Referring to Fig. 2, controller system 1 includes control unit 100, a security unit 200, a safety unit 300, one or more functional units 400, and a power supply unit 450.

Control unit 100 and security unit 200 are connected to each other through any data transmission path (for example, PCI Express, Ethernet (registered trademark), or the like). Control unit 100 is connected to safety unit 300 or one or more functional units 400 via an internal bus (not illustrated). Note that control unit 100 and security unit 200 may be connected to each other via an internal bus (not illustrated).

Control unit 100 executes a key process in controller system 1. Control unit 100 includes control engine 150, and executes control computation for controlling the control target according to required specifications discretionarily designed. The control computation performed by control unit 100 is also referred to as "standard control" in comparison with control computation performed by safety unit 300 which will be described later. In the configuration example illustrated in Fig. 2, control unit 100 has one or more communication ports.

Security unit 200 is connected to control unit 100. Security unit 200 has security engine 250 and thus has a security function for controller system 1. In the configuration example illustrated in Fig. 2, security unit 200 includes one or more communication ports. Security unit 200 detects an incident and executes processing according to the detected incident, thereby achieving execution of the incident response operation.

Safety unit 300 executes control computation for implementing a safety function related to the control target independently of control unit 100. The control computation executed by safety unit 300 is also referred to as "safety control". Commonly, the "safety control" is designed to satisfy a requirement for implementing the safety function prescribed in IEC 61508 or the like. The "safety control" collectively refers to processing for preventing a threat to human safety by facility, machine, or the like.

Functional unit 400 provides various functions for implementing control on various control targets by controller system 1. Functional unit 400 may typically include an I/O unit, a safety I/O unit, a communication unit, a motion controller unit, a temperature adjustment unit, a pulse counter unit, and the like. Examples of the I/O unit include a digital input (DI) unit, a digital output (DO) unit, an analog input (AI) unit, an analog output (AO) unit, a pulse catch input unit, and a composite unit obtained by combining a plurality of types. The safety I/O unit is in charge of I/O processing related to the safety control.

Power supply unit 450 supplies power of a predetermined voltage to each unit constituting controller system 1.

### <C. Hardware configuration example of each unit>

A hardware configuration example of each unit constituting controller system 1 according to the present embodiment will be described.

### (c1: Control unit 100)

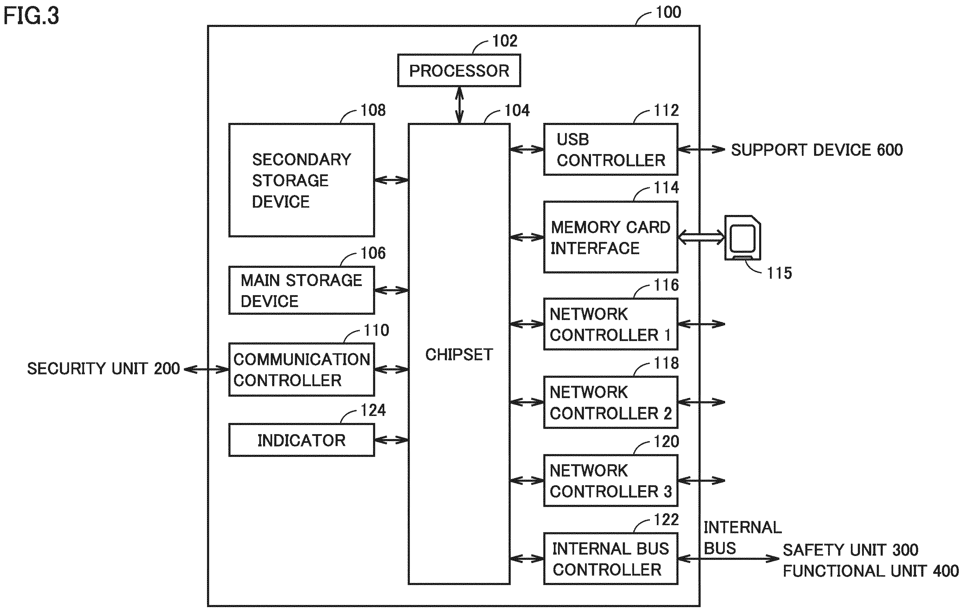

Fig. 3 is a schematic diagram illustrating a hardware configuration example of control unit 100 constituting controller system 1 according to the present embodiment. Referring to Fig. 3, control unit 100 includes, as main components, a processor 102 such as a central processing unit (CPU) or a graphical processing unit (GPU), a chipset 104, a main storage device 106, a secondary storage device 108, a communication controller 110, a USB controller 112, a memory card interface 114, network controllers 116, 118, and 120, an internal bus controller 122, and an indicator 124.

Processor 102 reads various programs stored in secondary storage device 108 or memory card 115, deploys the programs in main storage device 106, and executes the programs, thereby implementing control computation according to the standard control and various kinds of processing as described later. Main storage device 106 includes a volatile storage device such as a dynamic random access memory (DRAM) or a static random access memory (SRAM). Secondary storage device 108 includes, for example, a non-volatile storage device such as a hard disc drive (HDD) or a solid state drive (SSD).

Chipset 104 mediates exchange of data between processor 102 and each component, thereby implementing the processing of entire control unit 100.

Secondary storage device 108 stores, in addition to a system program for implementing a basic function of control unit 100, a control program that operates in an operating environment provided by the system program. The control program includes a user program that is a program created by the user.

Communication controller 110 is in charge of data exchange with security unit 200. As communication controller 110, a communication chip compatible with PCI Express, Ethernet (registered trademark), or the like can be adopted, for example.

USB controller 112 is in charge of data exchange with any information processing device via USB connection. For example, USB controller 112 is in charge of data exchange with a support device 600.

Memory card interface 114 is configured such that memory card 115, which is an example of a storage medium, can be inserted therein and removed therefrom. Memory card interface 114 can write data such as the control program and various settings to memory card 115 or read data such as the control program and various settings from memory card 115.

Each of network controllers 116, 118, and 120 is in charge of data exchange with any device via the network. An industrial network protocol such as EtherCAT (registered trademark), EtherNet/IP (registered trademark), DeviceNet (registered trademark), or CompoNet (registered trademark) may be adopted for network controllers 116, 118, and 120.

Internal bus controller 122 is in charge of data exchange with safety unit 300 or one or more functional units 400 constituting controller system 1. For the internal bus, a communication protocol unique to a manufacturer may be used, or a communication protocol that is the same as or compliant with any of the industrial network protocols may be used.

Indicator 124 indicates an operation state, etc. of control unit 100, and includes one or more LEDs and the like arranged on a unit surface.

Although Fig. 3 illustrates the configuration example in which necessary functions are provided by processor 102 executing the program, some or all of these provided functions may be implemented using a dedicated hardware circuit (for example, ASIC or FPGA). Alternatively, the main part of control unit 100 may be implemented using hardware (for example, an industrial personal computer based on a general-purpose personal computer) in accordance with a general-purpose architecture. In this case, a plurality of operating systems (OSs) having different uses may be executed in parallel using a virtualization technology, and necessary applications may be executed on each OS.

### (c2: Security unit 200)

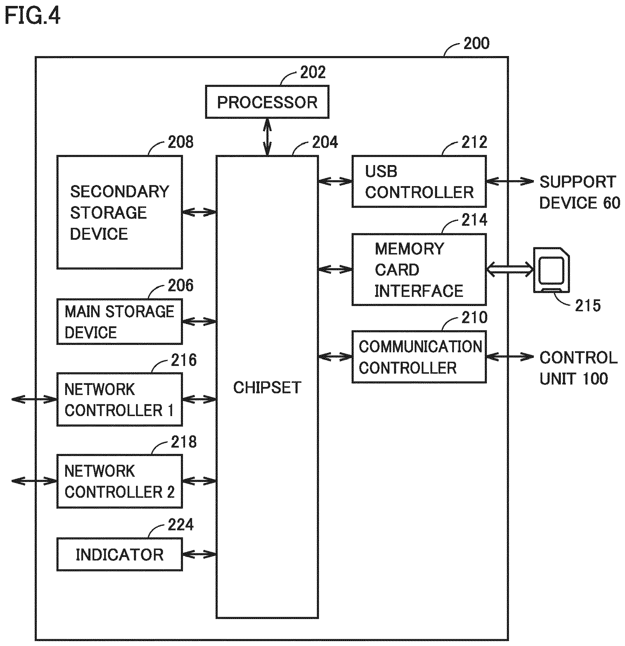

Fig. 4 is a schematic diagram illustrating a hardware configuration example of security unit 200 constituting controller system 1 according to the present embodiment. Referring to Fig. 4, security unit 200 includes, as main components, a processor 202 such as a CPU or a GPU, a chipset 204, a main storage device 206, a secondary storage device 208, a communication controller 210, a USB controller 212, a memory card interface 214, network controllers 216 and 218, and an indicator 224.

Processor 202 reads various programs stored in secondary storage device 208 or a memory card 215, deploys the programs in main storage device 206, and executes the programs, thereby implementing various security functions which will be described later. Main storage device 206 includes a volatile storage device such as a DRAM or a SRAM Secondary storage device 208 includes, for example, a non-volatile storage device such as an HDD or an SSD.

Chipset 204 mediates exchange of data between processor 202 and each component, thereby implementing the processing of entire security unit 200.

Secondary storage device 208 stores, in addition to a system program for implementing a basic function of security unit 200, a security system program that operates in an operating environment provided by the system program.

Communication controller 210 is in charge of data exchange with control unit 100. As communication controller 210, a communication chip compatible with PCI Express, Ethernet (registered trademark), or the like can be adopted, for example, as in communication controller 110 of control unit 100.

USB controller 212 is in charge of data exchange with any information processing device via USB connection. For example, USB controller 212 is in charge of data exchange with support device 600.

Memory card interface 214 is configured such that memory card 215, which is an example of a storage medium, can be inserted therein and removed therefrom. Memory card interface 214 can write data such as the control program and various settings to memory card 215 or read data such as the control program and various settings from memory card 215.

Each of network controllers 216 and 218 is in charge of data exchange with any device via the network. Network controllers 216 and 218 may adopt a general-purpose network protocol such as Ethernet (registered trademark).

Indicator 224 indicates an operation state, etc. of security unit 200, and includes one or more LEDs and the like arranged on a unit surface.

Although Fig. 4 illustrates the configuration example in which necessary functions are provided by processor 202 executing the program, some or all of these provided functions may be implemented using a dedicated hardware circuit (for example, ASIC or FPGA). Alternatively, the main part of security unit 200 may be implemented using hardware (for example, an industrial personal computer based on a general-purpose personal computer) in accordance with a general-purpose architecture. In this case, a plurality of OSs having different uses may be executed in parallel using a virtualization technology, and necessary applications may be executed on each OS.

### <D. Control system 10>

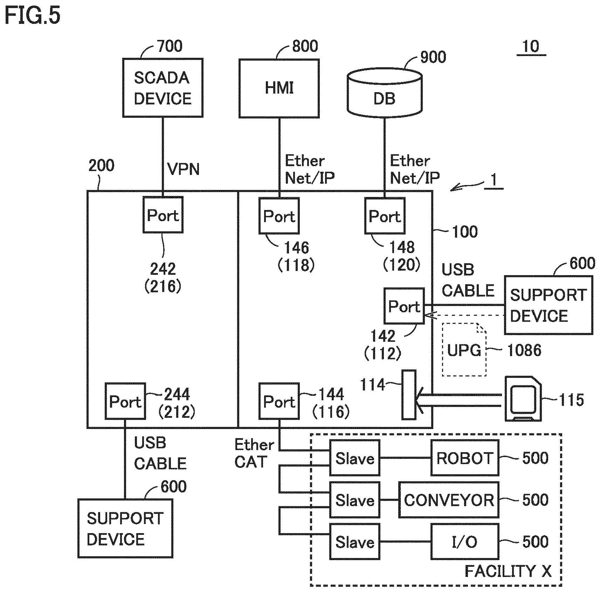

A typical example of control system 10 including controller system 1 will be described. Fig. 5 is a schematic diagram illustrating a typical example of control system 10 including controller system 1 according to the present embodiment. For convenience of description, functional unit 400 and power supply unit 450 are not illustrated in Fig. 5. In addition, in Fig. 5, "DB" means a database, and "UPG" means a user program.

As an example, control system 10 illustrated in Fig. 5 controls facility X as the control target. Facility X is, for example, a facility used in an assembly process, and includes, as field device 500, a conveyor for conveying a workpiece and a robot capable of giving any physical action to the workpiece on the conveyor.

In the example illustrated in Fig. 5, control unit 100 has communication ports 142, 144, 146, and 148. Communication port 142 corresponds to USB controller 112 in Fig. 3. Communication port 144 corresponds to network controller 116 in Fig. 3. Communication port 146 corresponds to network controller 118 in Fig. 3. Communication port 148 corresponds to network controller 120 in Fig. 3.

Control unit 100 is communicably connected to support device 600 through communication port 142. Support device 600 provides a user with functions such as a function of creating a program executed by each unit included in controller system 1, a debug function, and a function of setting various parameters.

A program created by the user using support device 600 is referred to as a user program 1086, and user program 1086 is transmitted from support device 600 to control unit 100 and executed by control unit 100. Support device 600 and control unit 100 are typically connected using a USB cable.

Note that user program 1086 may be stored in a storage medium such as memory card 115. Control unit 100 is configured such that memory card 115 can be inserted and removed via memory card interface 114, and can read user program 1086 stored in memory card 115.

Control unit 100 is communicatively connected to one or more field devices 500 via communication port 144. Field device 500 includes a sensor and a detector that collect various types of information necessary for control computation from the control target, an actuator that gives some action to the control target, and the like. In the example illustrated in Fig. 5, field device 500 includes a robot that gives some external action to the workpiece, a conveyor that conveys the workpiece, an I/O unit that exchanges a signal with a sensor or an actuator installed in the field, and the like. EtherCAT (registered trademark) is typically used as a communication protocol between field device 500 and control unit 100.

Control unit 100 is communicably connected to one or more human machine interfaces (HMIs) 800 via communication port 146. HMI 800 presents various types of information obtained by control computation in controller system 1 to an operator, and generates an internal command or the like for controller system 1 in response to an operation performed by the operator. EtherNet/IP (registered trademark) is typically used as a communication protocol between HMI 800 and control unit 100.

Control unit 100 is communicably connected to a database 900 through communication port 148. Database 900 collects various kinds of data (for example, information regarding traceability measured from each workpiece that is the control target, and the like) transmitted from controller system 1. Note that database 900 may be communicably connected to control unit 100 via an in-house network, or may be communicably connected to control unit 100 via a virtual private network (VPN) or the like. In the example illustrated in Fig. 5, EtherNet/IP (registered trademark) is used as a communication protocol between database 900 and control unit 100.

Security unit 200 has a communication port 242 and a communication port 244. Communication port 242 corresponds to network controller 216 in Fig. 4. Communication port 244 corresponds to USB controller 212 in Fig. 4.

Security unit 200 is communicably connected to a supervisory control and data acquisition (SCADA) device 700 via communication port 242. VPN is typically used for communication between security unit 200 and SCADA device 700.

Security unit 200 is communicably connected to support device 600 via communication port 244. When support device 600 and security unit 200 are communicably connected to each other, the setting related to the security can be installed in security unit 200 from support device 600.

Note that user program 1086 executed by control unit 100 may be installed by connecting security unit 200 and support device 600. Further, the setting related to the security may be installed by connecting control unit 100 and support device 600. Different support devices 600 may be used as support device 600 that can communicate with security unit 200 and support device 600 that can communicate with control unit 100, or common support device 600 may be used. In addition, one support device 600 may be simultaneously connectable to or may not be simultaneously connectable to control unit 100 and security unit 200.

Although not illustrated, security unit 200 may be connectable to a router having a function of relaying communication with an external network, a function of a fire wall (FW), and the like via communication port 244. When connected to the router, security unit 200 can communicate with a network outside control system 10 via an external network.

### <E. Functional configuration of controller system 1>

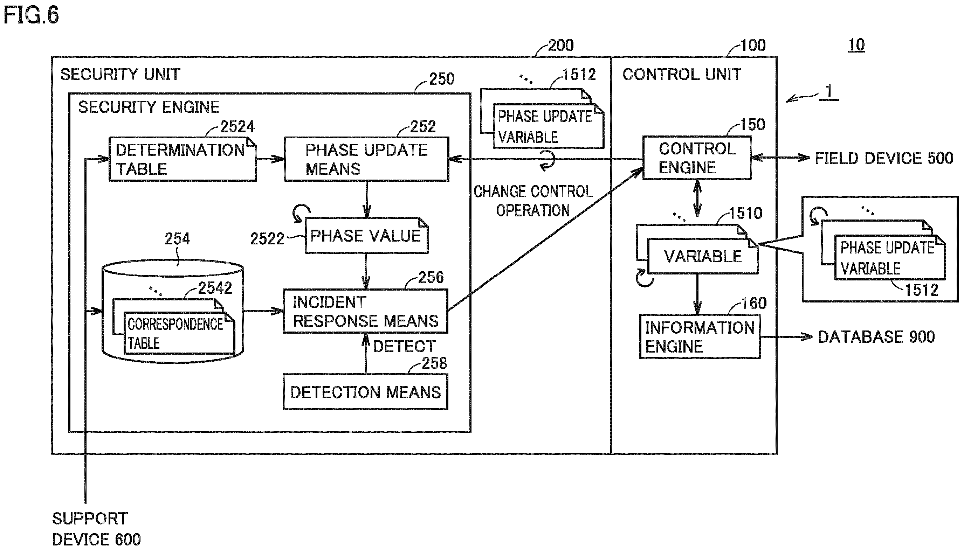

A functional aspect of controller system 1 will be described with reference to Fig. 6. Fig. 6 is a block diagram illustrating the functional configuration of controller system 1.

Control unit 100 includes control engine 150 serving as a processing execution unit that executes control computation related to standard control, and an information engine 160 that exchanges data with an external device. Security unit 200 includes security engine 250 for implementing security functions.

Each engine is implemented by any hardware element such as a processor of each unit, any software element such as various programs, or a combination thereof. Each engine can be implemented in any form.

Control engine 150 cyclically updates the value of variable 1510 which is the internal state value on the basis of the signal exchanged with field device 500 which is the control target.

Information engine 160 executes any information processing on data (variable values) retained by control unit 100. Typically, information engine 160 includes a process of cyclically transmitting data retained by control unit 100 to database 900 or the like. SQL or the like is used to transmit such data.

Security engine 250 executes the incident response operation in response to the incident that may occur in control system 10.

Security engine 250 includes phase update means 252, correspondence database 254, and incident response means 256. Phase update means 252 and incident response means 256 are implemented by, for example, execution of the system program for implementing the basic function of security unit 200 or the security system program that operates in the operating environment provided by the system program. Correspondence database 254 is implemented by secondary storage device 208 in Fig. 4.

Phase update means 252 updates a phase value (phase value 2522) indicating the operation state of the control target. Phase update means 252 updates phase value 2522 on the basis of a variable for determination (phase update variable 1512) discretionarily selected by the user among the values of variable 1510 updated by control engine 150. More specifically, phase update means 252 updates phase value 2522 by referring to a determination table 2524.

Determination table 2524 defines a condition for updating phase value 2522, and includes information capable of specifying phase update variable 1512 discretionarily selected by the user and information indicating phase value 2522 according to the value of phase update variable 1512.

Determination table 2524 is generated by support device 600. The generation of determination table 2524 by support device 600 will be described later.

Correspondence database 254 stores, for each phase, correspondence table 2542 which is operation definition information in which the content of the incident response operation is defined. Each correspondence table 2542 and phase value 2522 have a correspondence relationship.

When a detection means 258 detects an occurrence of an incident, incident response means 256 refers to phase value 2522 updated by phase update means 252 and correspondence database 254, refers to correspondence table 2542 corresponding to the phase indicated by phase value 2522, and executes the incident response operation.

For example, incident response means 256 gives a command to control engine 150 to change behavior in response to the incident that has occurred.

Detection means 258 detects the occurrence of the incident according to a detection condition. Note that the detection condition is not limited to a detection logic, and includes a threshold for determining that an incident has occurred.

The phase indicating the operation state of the control target is a state defined by the value of phase update variable 1512 discretionarily selected by the user, and can be discretionarily defined by the user. That is, controller system 1 according to the present embodiment can change the incident response operation for each phase discretionarily defined by the user. Thus, it is possible to design security according to a security policy different for each user.

Phase update means 252 of controller system 1 illustrated in Fig. 6 cyclically receives the value of phase update variable 1512 from control unit 100 and cyclically updates phase value 2522.

When detection means 258 detects the occurrence of the incident, incident response means 256 refers to cyclically updated phase value 2522 and executes the incident response operation according to phase value 2522.

Note that the incident response operation may include a preventive operation in preparation for a possible incident. The preventive operation may include, for example, an operation of detecting an occurrence of an incident, an operation of permitting connection to controller system 1, and the like. Specifically, in a case where the incident response operation includes detection of the occurrence of the incident, the detection condition may be changed according to phase value 2522. That is, security unit 200 may set the detection condition for each phase. For example, the threshold for determining that an incident has occurred may be changed according to the phase.

Furthermore, incident response means 256 may select correspondence table 2542 that defines the incident response operation cyclically or according to a change of phase value 2522. In a case where correspondence table 2542 is selected according to the change of phase value 2522, for example, notification indicating that phase value 2522 is changed by phase update means 252 is provided to incident response means 256, and incident response means 256 executes the incident response operation corresponding to the changed phase value according to the notification. In a case where the preventive operation in preparation for the incident that may occur is defined as correspondence table 2542, incident response means 256 may change the preventive operation cyclically according to phase value 2522 or according to the change of phase value 2522, regardless of whether detection means 258 has detected the incident.

### <F. Update timings of phase update variable and phase value>

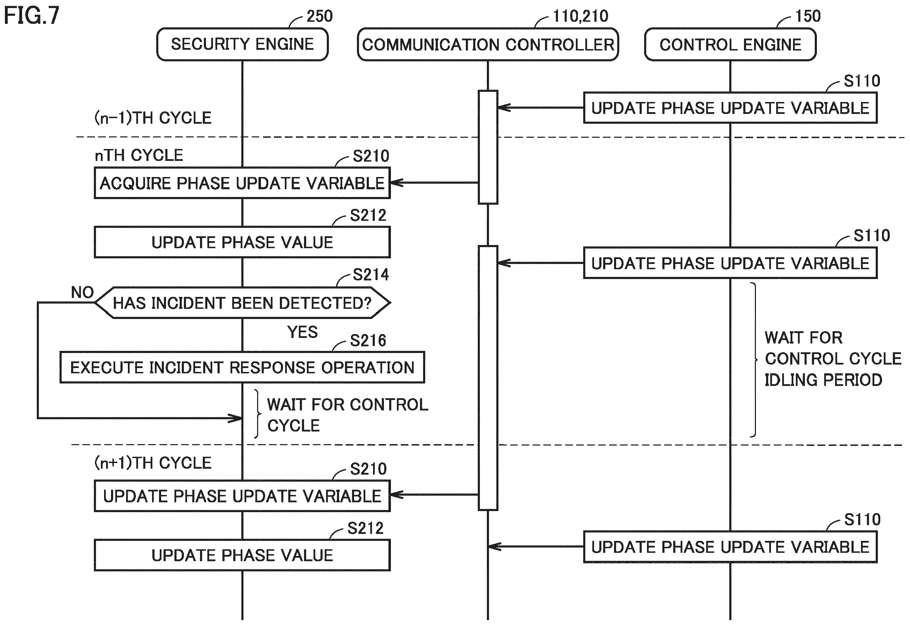

Update timings of phase update variable 1512 and phase value 2522 will be described with reference to Fig. 7. Phase update variable 1512 is cyclically updated by control engine 150 of control unit 100. Security engine 250 of security unit 200 cyclically acquires phase update variable 1512, and cyclically updates phase value 2522.

Fig. 7 is a diagram illustrating a cycle in which phase update variable 1512 is updated by control engine 150 and a cycle in which phase value 2522 is updated by security engine 250. Data is exchanged between control engine 150 and security engine 250 by communication controller 110 of control unit 100 and communication controller 210 of security unit 200.

Control engine 150 cyclically updates the value of variable 1510. Variable 1510 includes phase update variable 1512. In Fig. 7, only the update of the value of phase update variable 1512 will be described. Hereinafter, the update of the value of phase update variable 1512 executed by control engine 150 is also referred to as update processing.

Security engine 250 cyclically executes processing for updating phase value 2522 and executing the incident response operation. Hereinafter, this cyclically executed processing is also referred to as security processing.

The update processing and the security processing are executed in synchronization with each other in cycle. The security processing of, for example, the nth cycle will be described below.

In S210, security engine 250 acquires phase update variable 1512. Phase update variable 1512 acquired in S210 is phase update variable 1512 updated by control engine 150 in the previous cycle ((n-1)th cycle). Security engine 250 acquires phase update variable 1512 through communication controller 110 of control unit 100 and communication controller 210 of security unit 200.

In S212, security engine 250 updates phase value 2522. Specifically, security engine 250 updates phase value 2522 on the basis of phase update variable 1512 acquired in S210 and determination table 2524.

In S214, security engine 250 determines whether or not an incident has been detected. When no incident has been detected (NO in S214), security engine 250 ends the security processing and waits until the next (n+1)th cycle starts.

When the incident has been detected (YES in S214), security engine 250 executes the incident response operation. Specifically, security engine 250 executes the incident response operation according to phase value 2522 updated in S212 and correspondence database 254.

After executing the incident response operation, security engine 250 ends the security processing and waits until the next (n+1)th cycle starts.

On the other hand, in S110, control engine 150 updates the value of phase update variable 1512 at a constant cycle. After updating the value of phase update variable 1512, control engine 150 ends the update processing and waits until the next control cycle starts.

As described above, the update cycle is synchronized between phase value 2522 indicating the operation state of the control target and variable 1510 updated based on the signal exchanged with the control target, so that the state of the control target can be reflected in phase value 2522 in real time.

### <G. Incident response operation>

The incident response operation, which is a behavior of controller system 1 according to a possible incident, will be specifically described. The incident response operation can be roughly classified into a response for facility control and a response for information communication. The facility control mainly means a process performed by control engine 150 of control unit 100 and/or a safety engine of safety unit 300 that is the processing execution unit executing the control computation related to the safety control, and means a response to an operation of a facility or a machine to be controlled. The information communication mainly means a process performed by information engine 160 of control unit 100, and means a response to data exchange between control unit 100 and an external device, handling of information inside control unit 100, etc.

Examples of the behavior (response) of controller system 1 include "normal operation", "fallback", and "stop". The "normal operation" means a state in which facilities and machines can be continuously operated as designed in a system design and as planned in a production plan. The "fallback" means that controller system 1 continues to operate only in a limited manner, for example, controller system 1 is partially stopped (only partially operated), is reduced in performance (decreased in performance), or is limited in function. The "stop" means that the operation of the target facility, machine, or controller system 1 is safely stopped.

An example of "fallback" will be described.

### (1) Fallback of facility control

Fallback of facility control means that an operation is continued in a limited manner in terms of range, function, productivity, etc.

Regarding a range, a zone to be controlled can be limited. As the zone to be controlled, a control side such as a control device, a module attached to the control device, and a unit attached to the control device can be limited, for example. Further, a controlled side (control target) such as a specific machine, line, or floor, or entire factory can be limited.

Regarding a function, a specific process (for example, information control, standard control, safety control, etc.) among the processes provided by controller system 1 can be limited.

Regarding productivity, the productivity (for example, a line speed, the number of products per unit time, a production amount per unit time, etc.) can be temporarily limited for safety and security.

### (2) Fallback of information communication

Fallback of information communication means that an operation is performed in a limited manner in terms of range, direction, band, quality of service (QoS), data, etc.

Regarding a range, communication physical ports, communication logical ports, network disconnection, etc. can be limited, for example.

When communication physical ports are limited, use of a specific port among the communication ports provided in control unit 100 and security unit 200 can be limited. Further, only the communication ports on a host side or the communication ports on a field side from among the communication ports mounted in controller system 1 may be enabled.

When communication logical ports are limited, available TCP/UDP ports may be limited, or available communication protocols may be limited. Further, a MAC address or an IP address for receiving an access may be limited.

Regarding direction, the direction in which data flows in each port may be limited to, for example, only one direction. For example, for a specific port, only reception of data is permitted, or only transmission of data is permitted. By permitting only such unidirectional data, it is possible to prevent data from leaking from controller system 1 when any security threat is detected.

Regarding band, a communication rate may be limited (changed from 1 Gbps to 100 Mbps, for example) in order to reduce a communication load or a processing load of controller system 1.

Regarding QoS, priority of a packet to be passed may be dynamically changed. For example, when any security threat is detected, the priority of the packet to be passed may be changed to be high.

Regarding data, in an industrial network protocol such as EtherCAT, switching between validity and invalidity of process data communication and update of an output value may be limited (for example, the update of the output value is stopped, the output value is cleared to zero, or the previous value is retained), for example.

The "fallback" is not limited to the above, and may include an operation in a state in which any limitation is imposed on the normal operation. Note that "fallback" can also be regarded as partial stop, and "stop" can also be regarded as a concept obtained by extending "fallback" because "stop" can include complete stop of a specific function.

### <H. Hardware configuration of support device 600>

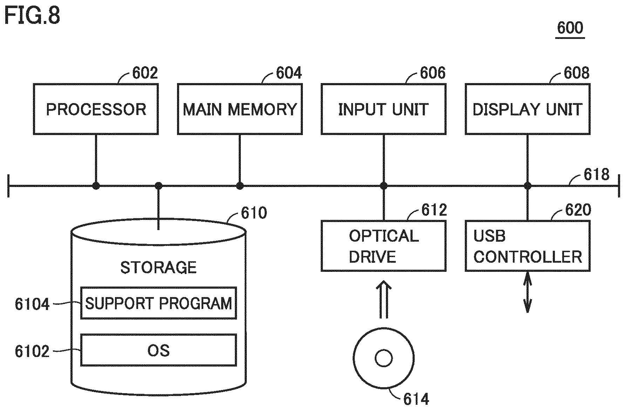

The generation of determination table 2524 by support device 600 will be described below. First, a hardware configuration of support device 600 will be described. Fig. 8 is a schematic diagram illustrating the hardware configuration example of support device 600. For example, support device 600 is constructed with hardware (for example, a general-purpose personal computer) in accordance with a general-purpose architecture.

Referring to Fig. 8, support device 600 includes a processor 602, a main memory 604, an input unit 606, a display unit 608, a storage 610, an optical drive 612, and a USB controller 620. These components are connected via a processor bus 618.

Processor 602 is constituted by a CPU, a GPU, or the like, and reads a program (for example, an OS 6102 and a support program 6104) stored in storage 610, deploys the program in main memory 604, and executes the program, thereby implementing setting processing or the like for controller system 1.

Main memory 604 includes a volatile storage device such as a DRAM or an SRAM. Storage 610 includes, for example, a non-volatile storage device such as an HDD or an SSD.

Storage 610 stores, in addition to OS 6102 for implementing basic functions, support program 6104 for providing a function as support device 600. That is, support program 6104 is executed by a computer connected to controller system 1 to implement support device 600 according to the present embodiment.

Input unit 606 includes a keyboard, a mouse, and the like, and receives a user operation. Display unit 608 includes a display, various indicators, a printer, and the like, and outputs processing results and the like from processor 602.

USB controller 620 exchanges data with controller system 1 or the like via USB connection.

Support device 600 including optical drive 612 reads a program from a non-transitory computer-readable recording medium 614 (for example, an optical recording medium such as a digital versatile disc (DVD)) storing the program and installs the read program in storage 610 or the like.

Support program 6104 and the like executed by support device 600 may be installed via computer-readable recording medium 614, or may be installed by being downloaded from a server device or the like on a network. Functions provided by support device 600 according to the present embodiment may be implemented by using a part of modules provided by the OS.

Fig. 8 illustrates the configuration example in which processor 602 executes the program to provide the necessary functions as support device 600. Alternatively, some or all of the provided functions may be implemented using a dedicated hardware circuit (for example, ASIC or FPGA).

### <I. Setting screen for defining discretionary phase>

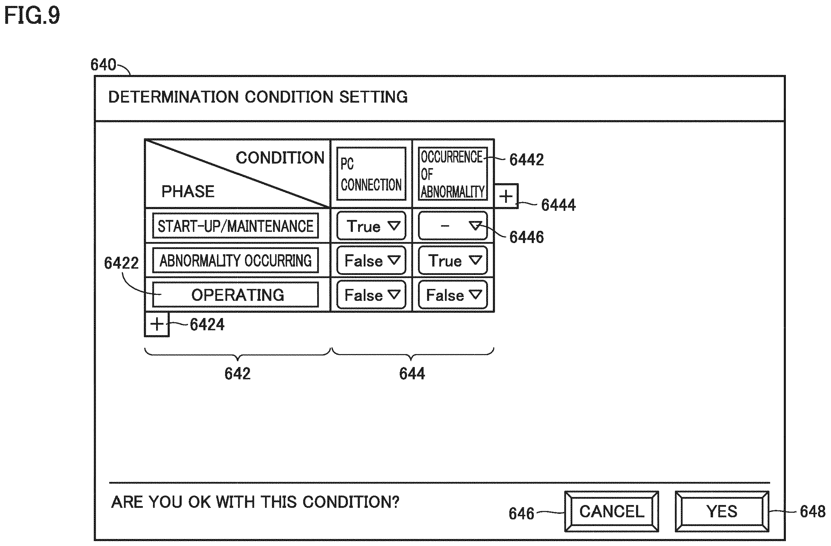

A method (setting method) for defining a phase, that is, a method for generating determination table 2524 will be described with reference to Figs. 9 to 11. Determination table 2524 includes information by which phase update variable 1512 can be specified. Phase update variable 1512 is selected by an operation performed by the user according to the setting screen illustrated in Figs. 9 to 11 provided by support device 600, for example. That is, support device 600 functions as a setting means that receives selection of phase update variable 1512 used to update phase value 1514.

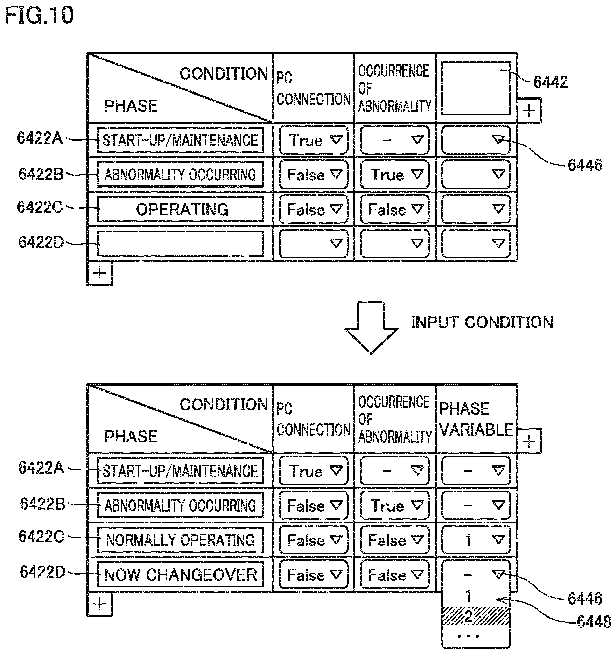

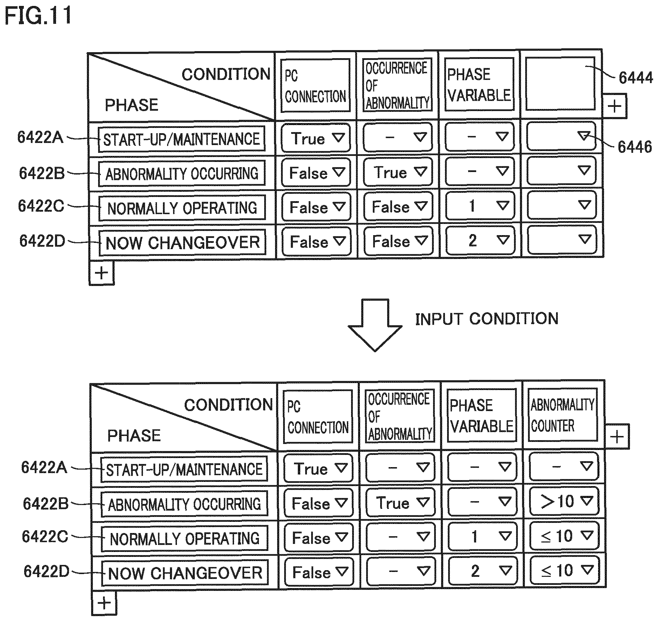

Fig. 9 is a diagram illustrating an example of a default value of the setting screen. Fig. 10 is a diagram for describing a method for adding a phase. Fig. 11 is a diagram for describing an example when phase update variable 1512 to be newly used for phase determination is selected.

Referring to Fig. 9, a setting screen 640 includes a phase region 642 for displaying names of phases and a condition input region 644 for defining each phase. Setting screen 640 further includes a cancel button 646 for canceling the set details that have been input and a confirmation button 648 for confirming the input set details.

Phase region 642 includes phase name cells 6422 each of which displays a name of a phase, and a phase addition button 6424 for adding a new phase. The phase name ("start-up/maintenance", "abnormality occurring", and "operating" in the example illustrated in Fig. 9) displayed in each name cell 6422 can be freely changed.

Condition input region 644 includes condition name cells 6442 each of which displays a condition name, a condition addition button 6444 for adding a new condition, and a selection tab 6446 for selecting a set value of each condition. Condition name cell 6442 can display phase update variable 1512 discretionarily selected by the user.

In the example illustrated in Fig. 9, "start-up/maintenance", "abnormality occurring", and "operating" are registered as the default values of the phases. "-" in Fig. 9 means that no condition is set. For example, "start-up/maintenance" means a state in which a PC is connected ("True" in the figure). "Abnormality occurring" means a state in which the PC is not connected ("False" in the figure) and an abnormality occurs ("True" in the figure). "Operating" means a state in which the PC is not connected ("False" in the figure) and no abnormality occurs ("False" in the figure).

The method for adding a phase will be described with reference to Fig. 10. When phase addition button 6424 is operated, an empty phase name cell 6422D is added. In addition, an empty selection tab 6446 for condition setting is added. Similarly, when condition addition button 6444 is operated, an empty condition name cell 6442 is added. In addition, an empty selection tab 6446 for condition setting is added.

The user can newly input any name in empty phase name cell 6422D. In addition, the user can select any variable, and set and register the selected variable in empty condition name cell 6442 as a phase update variable. Furthermore, support device 600 sets a value that can be the selected phase update variable as a selection candidate that can be selected by operation of selection tab 6446.

Note that support device 600 is preferably configured to be able to specify variable 1510 to be updated by control engine 150. As a result, the user can reliably select phase update variable 1512 from variables 1510 updated by control engine 150.

In the example illustrated in Fig. 10, a phase variable is newly selected as a phase update variable, a phase "changeover" is newly added as the phase, and the name of the phase "operating" is changed to "normally operating". In addition, when selection tab 6446 is operated, possible values of the phase variable are displayed as a selectable list 6448.

Referring to Fig. 11, it is also possible to newly add only the phase update variable. In the example illustrated in Fig. 11, a condition for changing to the phase of "abnormality occurring" is newly added. In this case, setting conditions for other phases may also be changed.

For example, when determination table 2524 generated according to the setting condition illustrated in Fig. 11 is installed in the security unit, a variable indicating whether or not the PC is connected, a variable indicating whether or not an abnormality occurs, a selected phase variable, and a variable indicating a value of an abnormality counter are transmitted as phase update variables 1512 from control engine 150 to security engine 250. In addition, phase update means 252 of security engine 250 updates phase value 2522 to a value indicating any one of "start-up/maintenance", "abnormality occurring", "normally operating", and "now changeover" on the basis of these phase update variables 1512.

Note that phase update variable 1512 is not limited to the value updated by control engine 150. For example, an internal state value of security engine 250 may be used. For example, when security engine 250 has a variable (internal state value) indicating whether or not the PC is connected, whether or not the PC is connected may be determined on the basis of this variable.

In addition, the abnormality counter is not limited to include the abnormality detected by the control unit, and may include an incident (abnormality) detected by detection means 258 of security engine 250.

As described above, in the present embodiment, phase update means 252 updates phase value 2522 by referring to determination table 2524 defining the condition for updating phase value 2522. Support device 600 also provides setting screen 640 for creating determination table 2524, and receives selection of variable 1510 that defines each phase and designation of the value of variable 1510.

### <J. Modification of method for implementing phase update means>

The above embodiment has described an example in which phase update means 252 is implemented by security unit 200. Note that the phase update means may be implemented by a system program of control unit 100. In this case, determination table 2524 is preferably stored in control unit 100.

In the above embodiment, phase update means 252 refers to determination table 2524 to update phase value 2522. Note that phase update means 252 may be implemented by execution of a user program which is created by the user and which includes a command to change a phase value.

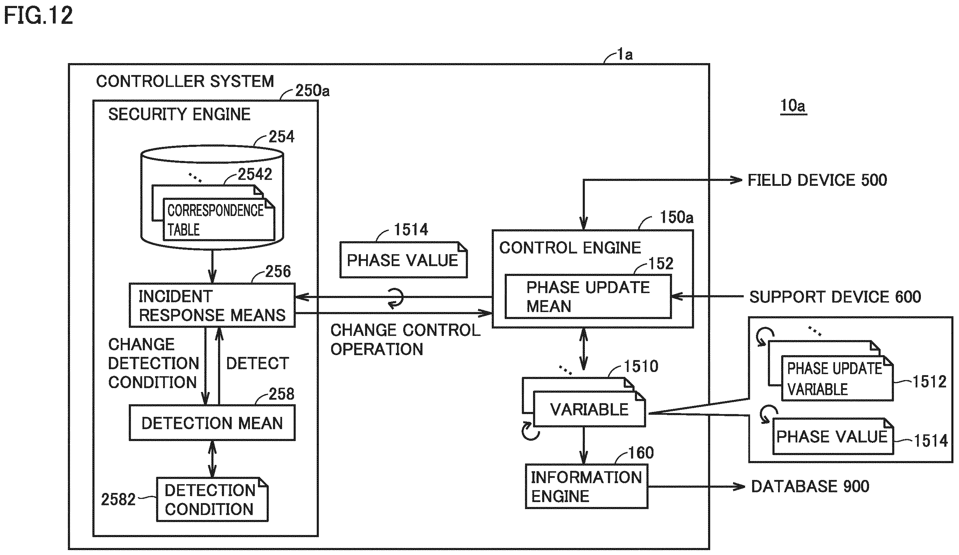

Fig. 12 is a block diagram illustrating a functional configuration of a control system 10a including a controller system 1a according to a modification. Control system 10a shown in Fig. 12 is different from control system 10 in including support device 600a. In addition, controller system 1a illustrated in Fig. 12 is different from controller system 1 in that controller system 1a includes a control engine 150a and a security engine 250a instead of control engine 150 and security engine 250.

Specifically, in controller system 1a, control engine 150a updates the phase value, and incident response means 256 of security engine 250a executes the incident response operation according to the phase value updated by control engine 150a and correspondence database 254.

Security engine 250a differs from security engine 250 in that security engine 250a does not include phase update means 252 and determination table 2524. The other configurations are the same as those of security engine 250, so that the description thereof will be omitted.

Control engine 150a is different from control engine 150 in including a phase update means 152. Unlike phase update means 252, phase update means 152 is incorporated in a part of control engine 150a. That is, variable 1510 updated by control engine 150a includes phase value 1514.

Phase update means 152 refers to phase update variable 1512 included in variable 1510 to determine whether to execute a command to change phase value 1514, and updates phase value 1514 according to the determination.

Support device 600a has an editor function for creating a user program for executing phase update means 152, and provides an object of a change command for changing phase value 1514. That is, the function of phase update means 152 is provided by support device 600a.

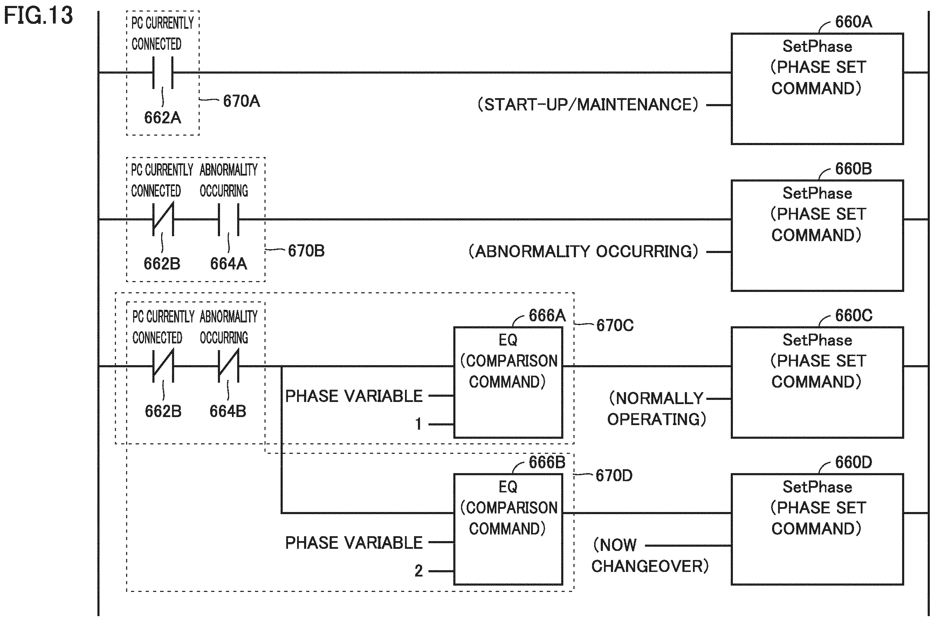

Fig. 13 is a diagram illustrating an example of the user program for implementing phase update means 152. The user program illustrated in Fig. 13 can be created using the editor function provided by support device 600a. Although the user program illustrated in Fig. 13 is created with a code of the ladder program, the user program may be created in another programming language.

The user program for implementing phase update means 152 includes a plurality of change commands 660 (660A, 660B, 660C, 660D) for updating phase value 1514 and an execution condition defining unit 670 (670A, 670B, 670C, 670D) that defines an execution condition for executing each change command 660.

For example, the user program is created such that change command 660A is executed when the condition defined by execution condition defining unit 670A is satisfied.

The user defines the conditions in execution condition defining unit 670 by combining the conditions defined by contacts A 662A and 664A, contacts B 662B and 664B and comparison commands 666A and 666B. The variable (PC currently connected, abnormality occurring, phase variable, etc.) referred to by each condition corresponds to the phase update variable.

As described above, the user can create the user program for updating phase value 1514 by combining any change command 660 and any condition using the edit function provided by support device 600a. That is, support device 600a functions as a setting means that receives an execution condition of the change command.

### <K. Appendix>

The present embodiment and the modifications as described above include the following technical ideas.

### [Configuration 1]

A control system (10, 10a) for controlling a control target, the control system comprising:
a control engine (150, 150a) configured to cyclically update an internal state value on the basis of a signal exchanged with the control target;
a security engine (250, 250a) configured to execute an incident response operation in response to an incident that possibly occurs in the control system; and
a phase update means (252) configured to update a value (2522, 1514) of a phase indicating an operation state of the control target on the basis of one or more values (1512) discretionarily selected in advance by a user from the internal state value (1510) retained by the control engine and an internal state value retained by the security engine, wherein
the security engine includes
a means (254) configured to retain operation definition information (2542) in which content of the incident response operation is defined for each phase, and
an execution means (256) configured to execute a corresponding incident response operation defined in the operation definition information according to the value of the phase updated by the phase update means.

### [Configuration 2]

The control system according to configuration 1, further comprising a setting means (600, 600a) configured to receive selection of the one or more values used for updating the value of the phase.

### [Configuration 3]

The control system according to configuration 1 or 2, wherein
the phase update means (152) is incorporated in a part of the control engine (150a), and
a control program executed by the control engine includes one or more commands (660) for updating a value of the phase.

### [Configuration 4]

The control system according to configuration 2, wherein
the phase update means is incorporated in a part of the control engine (150a),
a control program executed by the control engine includes one or more commands (660) for updating a value of the phase, and
the setting means (600a) receives an execution condition (670) for executing the one or more commands.

### [Configuration 5]

The control system according to configuration 1 or 2, wherein the phase update means updates a value of the phase according to a determination condition that defines the phase.

### [Configuration 6]

The control system according to configuration 2, wherein
the phase update means (252) updates a value of the phase according to a determination condition (2524) defining the phase, and
the setting means (600) receives, as the determination condition, selection of a value that defines the phase from the internal state value retained by the control engine and the internal state value retained by the security engine.

### [Configuration 7]

The control system according to any one of configurations 1 to 6, further comprising:
a control unit (100) having the control engine; and
a security unit (200) having the security engine, wherein
a cycle of updating, by the control unit, the one or more values used for updating the value of the phase is synchronized with a cycle of updating the value of the phase by the phase update means.

It should be understood that the embodiments disclosed herein are illustrative in all respects and not restrictive. The scope of the present invention is defined not by the above description but by the claims, and is intended to include meanings equivalent to the claims and all modifications within the scope.

### REFERENCE SIGNS LIST

1, 1a: Controller system, 10, 10a: Control system, 100: Control unit, 102, 202, 602: Processor, 104, 204: Chipset, 106, 206: Main storage device, 108, 208: Secondary storage device, 110, 210: Communication controller, 112, 212, 620: USB controller, 114, 214: Memory card interface, 115, 215: Memory card, 116, 118, 120, 216, 218: Network controller, 122: Internal bus controller, 124, 224: Indicator, 142, 144, 146, 148, 242, 244: Communication port, 150, 150a: Control engine, 152, 252: Phase update means, 160: Information engine, 200: Security unit, 250, 250a: Security engine, 254: Correspondence database, 256: Incident response means, 258: Detection means, 300: Safety unit, 400: Functional unit, 450: Power supply unit, 500: Field device, 600, 600a: Support device, 604: Main memory, 606: Input unit, 608: Display unit, 610: Storage, 612: Optical drive, 614: Recording medium, 618: Processor bus, 640: Setting screen, 642: Phase region, 644: Condition input region, 646: Cancel button, 648: Confirmation button, 660, 660A: Change command, 662A, 662B, 664A, 664B: Contact, 666A, 666B: Comparison command, 670, 670A: Execution condition defining unit, 700: SCADA device, 800: HMI, 900: Database, 1086: User program, 1510: Variable, 1512: Phase update variable, 1514, 2522: Phase value, 2524: Determination table, 2542: Correspondence table, 6104: Support program, 6422, 6422D: Phase name cell, 6424: Phase addition button, 6442: Condition name cell, 6444: Condition addition button, 6446: Selection tab, 6448: List

## Claims

1. A control system for controlling a control target, the control system comprising:
a control engine configured to cyclically update an internal state value on the basis of a signal exchanged with the control target;
a security engine configured to execute an incident response operation in response to an incident that possibly occurs in the control system; and
a phase update means configured to update a value of a phase indicating an operation state of the control target on the basis of one or more values discretionarily selected in advance by a user from the internal state value retained by the control engine and an internal state value retained by the security engine, wherein
the security engine includes
a means configured to retain operation definition information in which content of the incident response operation is defined for each phase, and
an execution means configured to execute a corresponding incident response operation defined in the operation definition information according to the value of the phase updated by the phase update means.

2. The control system according to claim 1, further comprising a setting means configured to receive selection of the one or more values used for updating the value of the phase.

3. The control system according to claim 1 or 2, wherein
the phase update means is incorporated in a part of the control engine, and
a control program executed by the control engine includes one or more commands for updating a value of the phase.

4. The control system according to claim 2, wherein
the phase update means is incorporated in a part of the control engine,
a control program executed by the control engine includes one or more commands for updating a value of the phase, and
the setting means receives a condition for executing the one or more commands.

5. The control system according to claim 1 or 2, wherein the phase update means updates a value of the phase according to a determination condition that defines the phase.

6. The control system according to claim 2, wherein
the phase update means updates a value of the phase according to a determination condition defining the phase, and
the setting means receives, as the determination condition, selection of a value that defines the phase from the internal state value retained by the control engine and the internal state value retained by the security engine.

7. The control system according to any one of claims 1 to 6, further comprising:
a control unit having the control engine; and
a security unit having the security engine, wherein
a cycle of updating, by the control unit, the one or more values used for updating the value of the phase is synchronized with a cycle of updating the value of the phase by the phase update means.
